# FASCICULE DE BREVET EUROPEEN

(11) **EP 1 122 115 B1**
(45) Date de publication et mention de la délivrance du brevet: **08.10.2003**
(21) Numéro de dépôt: 01400129.1
(22) Date de dépôt: 17.01.2001
(51) Int. Cl.: B60K 15/04

(54) **Dispositif de remplissage de réservoir à carburant notamment pour un véhicule automobile**
Vorrichtung zum Betanken eines Kraftstoffbehälters insbesondere für ein Kraftfahrzeug
Device for filling a fuel tank in particular for motor vehicle

(30) Priorité: 03.02.2000 FR 0001364
(43) Date de publication de la demande: 08.08.2001
(73) Titulaire: Peugeot Citroen Automobiles SA, 92200 Neuilly sur Seine (FR)
(72) Inventeur: Lefèbvre, Fanny Cathy Evelyne, 25200 Montbeliard (FR); Achard, Jean-Luc Maurice, 38100 Grenoble (FR); Tisserand, Laurent, 25700 Valentigney (FR)
(74) Mandataire: Thinat, Michel

(56) Documents cités:
- US-A- 3 044 270
- US-A- 5 860 460

## Description

La présente invention concerne un dispositif de remplissage de réservoir à carburant notamment pour un véhicule automobile.

Le remplissage d'un réservoir à carburant de véhicule automobile à l'aide d'un pistolet relié à une pompe d'alimentation en carburant et introduit dans une embouchure de réception du pistolet raccordée à une tubulure d'alimentation en carburant du réservoir est bien connu. Il se traduit souvent par des coupures intempestives du pistolet, des crachotements et des rejets de carburant par effet de refoulement lorsque l'utilisateur utilise des pistolets de remplissage aux débits disponibles dans les stations services.

De tels disfonctionnements sont liés à la difficulté de maîtriser l'écoulement du carburant dans la tubulure d'alimentation. Ainsi, la condition initiale d'écoulement du carburant varie déjà en fonction de la position du pistolet d'alimentation imposée par l'utilisateur. En outre, l'écoulement du carburant est fortement perturbé par l'impact du jet de carburant contre la surface interne de la tubulure d'alimentation et qui provoque les phénomènes de moussage et de crachotements du carburant. Enfin, l'écoulement du carburant, dès son entrée dans la tubulure d'alimentation et tout le long de celle-ci, au lieu d'être homogène, est chaotique.

Diverses solutions ont été adoptées jusqu'à ce jour pour tenter d'éliminer ces disfonctionnements lors du remplissage du réservoir.

Ces solutions connues ont consisté à augmenter le diamètre de la tubulure d'alimentation à son extrémité inférieure, implanter des cônes ou volets d'anti-refoulement en bas de la tubulure d'alimentation et implanter une embouchure permettant de recevoir le pistolet de façon guidée pour orienter le jet de carburant.

Cependant, ces solutions connues n'ont pas donné entière satisfaction et sont relativement coûteuses.

La présente invention propose un dispositif de remplissage de réservoir à carburant conçu de façon à limiter au maximum les risques de coupures intempestives du pistolet d'alimentation, de crachotements et de rejet de carburant et de faciliter l'écoulement.

A cet effet, selon l'invention, le dispositif de remplissage de réservoir à carburant notamment pour un véhicule automobile, du type comprenant une tubulure d'alimentation en carburant du réservoir communiquant avec une embouchure de réception et de guidage d'un pistolet d'alimentation en carburant, est caractérisé en ce que la tubulure d'alimentation est reliée à l'embouchure par l'intermédiaire d'un canal d'alimentation raccordé à la sortie de l'embouchure et présentant une partie découpée suivant sa longueur, enroulée sur la partie supérieure de la tubulure et fixée de façon étanche sur la partie supérieure pour définir une chambre d'arrivée de carburant communiquant avec une saignée sous-jacente réalisée à travers la paroi de la tubulure en s'étendant dans le même sens d'enroulement que la partie découpée du canal d'alimentation, de façon à définir un passage d'entrée de carburant tangentielle à la surface interne de la tubulure.

De préférence, la tubulure d'alimentation comprend à sa partie inférieure en-dessous du passage d'entrée de carburant un convergent raccordé au réservoir par une tuyauterie.

La partie découpée du canal d'alimentation est enroulée en formant une hélice s'étendant autour de la partie supérieure de la tubulure.

La partie enroulée découpée du canal d'alimentation est inclinée relativement à l'axe longitudinal de la tubulure.

L'extrémité du canal d'alimentation raccordée à l'embouchure présente une inclinaison relativement à la partie supérieure de la tubulure comprise entre 0 et 90°.

L'extrémité supérieure de la tubulure est obstruée par une paroi transversale en bout.

La paroi de fermeture de la tubulure comporte un embout tubulaire de raccordement d'une conduite raccordée à son extrémité opposée à une ligne de dégazage.

Le passage d'entrée de carburant est de préférence réalisé sur le dessus de la tubulure d'alimentation.

La partie extrême du conduit, située côté alimentation en carburant, se trouve dans le prolongement de l'embouchure et permet le guidage du bec du pistolet dans le conduit tout en laissant une certaine distance entre l'extrémité du bec, une fois le pistolet positionné, et le début de la courbure du conduit périphérique et en permettant la détection du carburant par le pistolet par le prolongement de la saignée sous-jacente.

De préférence, la distance précitée est comprise entre environ 5 mm et environ 5 cm.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple, illustrant plusieurs modes de réalisation de l'invention, et dans lesquels :
- La figure 1 représente en perspective le premier mode de réalisation conforme à l'invention du dispositif de remplissage d'un réservoir à carburant de véhicule automobile ;
- La figure 2 représente en perspective le deuxième mode de réalisation du dispositif de remplissage de l'invention ;
- La figure 3 représente schématiquement le dispositif de remplissage de la figure 1;
- La figure 4 est une vue partielle en perspective de la partie supérieure de la tubulure d'alimentation de la figure 1, munie de son canal d'alimentation ;
- La figure 5 est une vue partielle en perspective de la partie supérieure de la tubulure correspondant à celle de la figure 2 et pourvue d'un canal d'alimentation enroulé sur une circonférence de la tubulure ;
- La figure 6 est une vue partielle de dessus de la partie supérieure de la tubulure d'alimentation de la figure 1;
- La figure 7 représente la position angulaire du pistolet d'alimentation en carburant dans son embouchure ;
- Les figures 8 et 9 sont des vues en bout de la partie supérieure de la tubulure, dont le canal d'alimentation est fixé respectivement en haut et en bas de la tubulure ;
- La figure 10 est une vue schématique de côté d'un convergent permettant d'expliquer le principe de remplissage hydrocyclonique d'un réservoir pour créer un écoulement ordonné du carburant dans la tubulure d'alimentation ;
- La figure 11 est une vue de dessus suivant la flèche XI de la figure 10 ; et
- La figure 12 représente l'écoulement du carburant dans le convergent raccordé en sortie de la tubulure.

L'invention utilise l'application du remplissage du type hydrocyclonique au circuit à carburant relié à un réservoir d'un véhicule automobile dans le but de limiter les risques de coupures intempestives du pistolet d'alimentation, de crachotements et de rejet de carburant et de faciliter l'écoulement.

On sait que lors du remplissage d'un circuit à carburant, l'écoulement du carburant dans la tubulure d'alimentation est composé de deux phases de fluide comprenant du carburant liquide et du gaz (air et vapeur) entraîné avec le carburant. Le jet de carburant sortant du pistolet d'alimentation contient une émulsion, qui n'est pas entièrement libérée de son gaz lors de l'impact du jet contre la surface interne de la tubulure d'alimentation. Une partie de ce gaz est donc entraînée avec le liquide de carburant dans le réservoir. Dans la tubulure, l'écoulement d'air et de vapeur restant s'effectue à contre-courant et à une vitesse différente de celle du carburant liquide.

C'est la raison pour laquelle, pour prédire l'écoulement du carburant dans la tubulure d'alimentation, il faut créer un écoulement ordonné, de caractéristiques connues, séparant les deux phases liquide et gazeuse.

D'autre part, dans le but d'éviter tout entraînement d'air dans le réservoir, il est nécessaire de créer un genre de bouchon liquide en bas de la tubulure d'alimentation et qui doit permettre d'éjecter le siphon de la ligne de dégazage dès le début du remplissage.

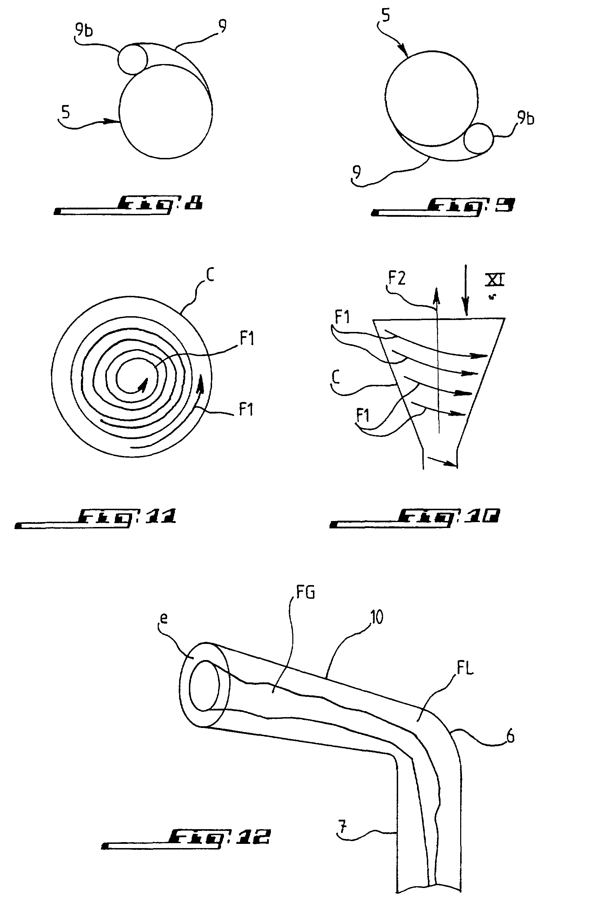

Un hydrocyclone est un écoulement tournant, créé au sein d'un convergent C représenté aux figures 10 et 11, et qui permet de séparer les deux phases liquide et gazeuse respectivement dense et légère. Au sein d'un hydrocyclone, l'écoulement des fluides liquide et gazeux à séparer est entraîné en rotation le long de la paroi interne du convergent C. Tout au long du rétrécissement de section du convergent C, l'écoulement du liquide symbolisé par les lignes de courant F1 relatives à la phase dense, s'appauvrit de la phase gazeuse la plus légère qui remonte au centre du convergent comme symbolisé par la flèche verticale dirigée vers le haut F2. Dans les conditions optimales, il se produit au bas de l'hydrocyclone, c'est-à-dire à l'extrémité inférieure du convergent, un phénomène de bouchon liquide et la totalité de la phase gazeuse remonte par le centre du convergent C. Ce fonctionnement idéal est obtenu grâce à un compromis adéquat entre la géométrie, (longueur et rapport entre le diamètre supérieur et inférieur du convergent), et l'alimentation de l'hydrocyclone.

L'application de l'alimentation hydrocyclonique à une tubulure d'alimentation en carburant d'un réservoir pour un véhicule automobile doit permettre de créer un enroulement du carburant dans la tubulure dans le but d'une séparation des deux phases liquide et gazeuse du carburant, d'une structuration de l'écoulement du carburant dans la tubulure, écoulement devenant indépendant de la position du pistolet d'alimentation, de la création d'un bouchon liquide en bas de la tubulure avec éjection du siphon et aucun entraînement d'air dans le réservoir et d'une architecture permettant une conception standardisée du dispositif de remplissage de l'invention.

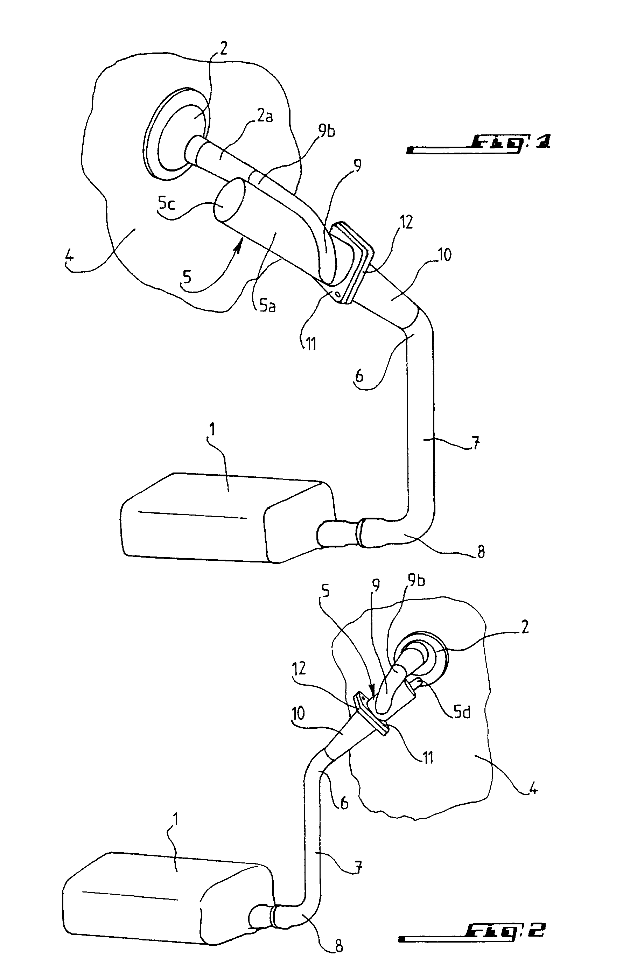

En se reportant maintenant d'une manière générale aux figures 1 à 9, le dispositif de remplissage d'un réservoir à carburant 1 pour un véhicule automobile comprend une embouchure 2 de réception et de guidage d'un pistolet d'alimentation en carburant 3 raccordé à une pompe débitant du carburant (non représentée), le bec 3a du pistolet 3 s'étendant de façon guidée à travers l'embouchure en faisant saillie de sa tubulure de sortie 2a. L'embouchure 2 est fixée à une paroi 4 de la carrosserie du véhicule, généralement constituée par une aile arrière de ce véhicule, de façon que l'orifice d'entrée de l'embouchure 2 soit accessible de l'extérieur, le corps de l'embouchure 2 se terminant par la tubulure de sortie 2a étant situé à l'intérieur de la carrosserie du véhicule.

Le dispositif de remplissage comprend en outre une tubulure 5 inclinée par rapport à l'horizontal et dont l'extrémité inférieure est raccordée par un conduit coudé supérieur 6, un conduit vertical intermédiaire 7 et un conduit coudé inférieur 8 à l'entrée du réservoir 1.

Selon l'invention, la tubulure d'alimentation 5 est reliée à l'embouchure 2 par l'intermédiaire d'un canal d'alimentation 9, tel que par exemple un tuyau flexible, et raccordé au conduit de sortie 2a de l'embouchure 2.

Le canal d'alimentation 9 présente une partie 9a découpée suivant sa longueur et enroulée sur la partie supérieure 5a de la tubulure 5 en étant fixée de façon étanche sur la surface extérieure de la partie 5a, pour définir une chambre d'arrivée de carburant qui communique avec une saignée sous-jacente 5b réalisée à travers la paroi de la tubulure 5 en s'étendant dans le même sens d'enroulement que la partie découpée du canal d'alimentation 9 de façon à définir un passage d'entrée de carburant dans la tubulure 5 tangentiel à la surface interne de cette tubulure.

Une telle alimentation périphérique de la tubulure 5 par l'intermédiaire du canal d'alimentation 9 permet de guider le carburant suivant un mouvement de rotation et d'assurer un écoulement progressif provenant du canal d'alimentation jusqu'à l'intérieur de la tubulure sans décollement du carburant. Dès l'entrée dans le canal d'alimentation 9, le jet de carburant est au contact de la surface intérieure de la tubulure 5 grâce à la saignée 5b qui permet également au pistolet d'alimentation de détecter la montée du carburant en fin de remplissage du réservoir 1.

Un convergent 10 est raccordé à l'extrémité inférieure de la tubulure d'alimentation 5 en-dessous du passage d'entrée de carburant constitué par la saignée 5b, le diamètre du convergent se réduisant le long de celui-ci vers le conduit coudé de raccordement 6 et permet de créer un bouchon liquide en bas de celui-ci pour empêcher l'entraînement de gaz dans le réservoir 1.

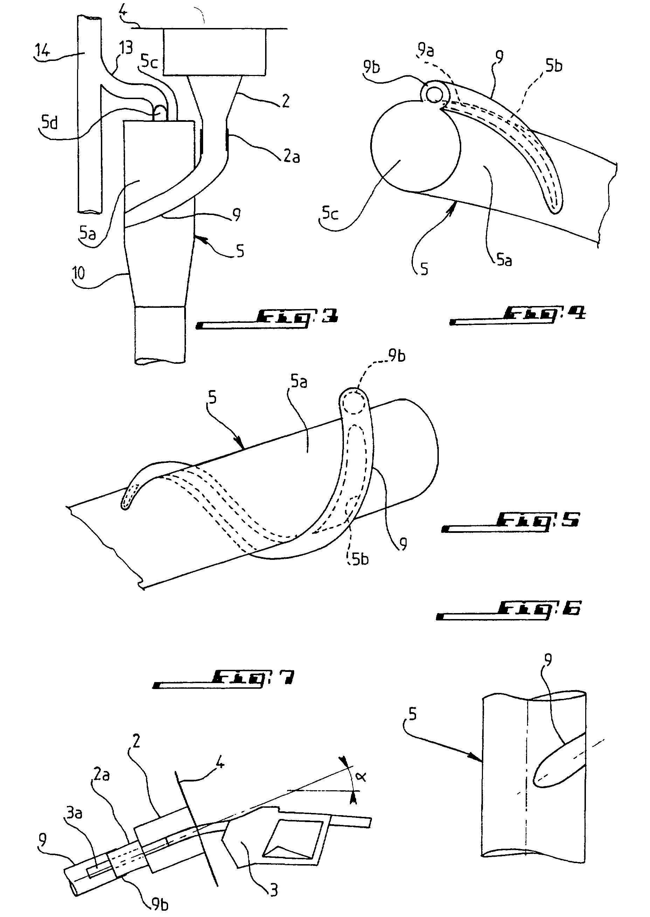

La partie découpée du canal d'alimentation 9 est enroulée en formant une hélice s'étendant autour de la partie supérieure 5a de la tubulure 5 suivant une demi-circonférence de cette tubulure. Cependant, l'enroulement de cette partie découpée du canal d'alimentation 9 peut s'étendre autour de la tubulure 5 suivant une circonférence, voire même plus comme représenté en figure 5 sans pour autant accroître l'encombrement de l'ensemble. De préférence, le canal d'alimentation 9 est incliné par rapport à l'axe longitudinal de la tubulure 5 suivant un angle d'inclinaison de 45° comme cela ressort mieux de la figure 6.

Les figures 1 et 4 montrent que l'extrémité 9b du canal d'alimentation 9 raccordée au conduit de sortie 2a de l'embouchure 2 est parallèle à la partie supérieure 5a de la tubulure 5, tandis que les figures 2 et 5 montrent que cette extrémité 9b est perpendiculaire à la partie supérieure 5a de la tubulure 5.

L'extrémité supérieure de la tubulure 5 est fermée par une paroi transversale en bout 5c qui comporte un embout tubulaire 5d solidaire de la paroi coaxialement à l'extérieure de celle-ci et sur laquelle est raccordée une conduite 13 dont l'extrémité opposée est raccordée en communication de fluide avec une ligne de dégazage 14.

De préférence, le canal d'alimentation 9 est enroulé sur le dessus de la tubulure comme représenté en figure 8. Selon la variante de réalisation représentée en figure 9, le canal d'alimentation 9 est enroulé en-dessous de la tubulure 5.

Pour satisfaire à l'architecture d'un véhicule automobile et à la contrainte d'ergonomie concernant l'utilisation du pistolet d'alimentation, l'embouchure de guidage 2 de celui-ci est positionnée suivant une inclinaison α par rapport à l'horizontale d'environ 30° comme cela ressort de la figure 7, l'extrémité 9b du canal d'alimentation 9 raccordée à la tubulure de sortie 2a de l'embouchure 2 devant, bien entendu, respecter cet angle d'inclinaison.

Dans le cas où la longueur d'enroulement du canal d'alimentation 9 est fixée à une demi-circonférence et pour la configuration selon laquelle l'extrémité 9b du canal d'alimentation est perpendiculaire à la partie supérieure de la tubulure 5, la longueur d'enroulement du canal 9 est d'environ 10cm, tandis que pour la configuration selon laquelle l'extrémité 9b du canal d'alimentation est dans l'allongement de la partie supérieure de la tubulure 5, cette longueur pouvant être, par exemple, d'environ 18cm, pour une inclinaison du canal d'alimentation 9 par rapport à l'axe de tubulure de 45°.

Avantageusement, la partie extrême du conduit 9, située côté alimentation en carburant, se trouve dans le prolongement de l'embouchure 2 et permet le guidage du bec 3a du pistolet 3 dans le conduit 9 tout en laissant une certaine distance entre l'extrémité du bec 3a, une fois le pistolet 3 positionné, et le début de la courbure du conduit périphérique 9 tout en permettant la détection du carburant par le pistolet 3 par le prolongement de la saignée sous-jacente. De préférence, cette distance est comprise entre environ 5 mm et environ 5 cm.

Le dispositif de remplissage de l'invention a été testé comparativement aux solutions connues antérieurement. Les essais comparatifs ont été effectués en utilisant comme carburant de l'essence sans plomb introduite dans la tubulure d'alimentation à des débits de remplissage disponibles dans les stations services pour un diamètre en bas du convergent 10 de 20 à 40mm.

A ces débits de remplissage, on a observé, sur une tubulure classique, un écoulement extrêmement chaotique et dépendant de la position du pistolet et dans la zone de raccordement de la tubulure au réservoir, on a également observé un phénomène de recirculation de carburant due à l'impact du jet de carburant provenant du pistolet contre la surface intérieure de la tubulure, accompagné du phénomène de moussage du carburant et, en outre, une importante quantité d'air était entraînée avec le carburant dans le réservoir.

Au contraire, selon le dispositif de l'invention, le mouvement de rotation du carburant imposé par le canal d'alimentation enroulé sur la tubulure d'alimentation et la présence de la saignée de cette tubulure s'étendant tangentiellement à la surface interne de la tubulure, on observe, proportionnellement au débit de remplissage, un écoulement de carburant homogène et structuré suivant des lignes de courant d'une direction imposée par le canal d'alimentation et un équilibre stable se met en place dans le convergent 10 et l'épaisseur du fluide dans le convergent à la paroi intérieure de celui-ci devient de plus en plus importante jusqu'à faire apparaître une frontière ou interface très distincte entre le fluide gazeux en rotation symbolisé en FG en figure 12 et le liquide en rotation symbolisé en FL. En outre, en partie inférieure du convergent, dans la zone de raccordement au tuyau 7, il se produit un phénomène de bouchon liquide de sorte que la totalité du fluide gazeux, constitué par le volume d'air, remonte par le centre du convergent 10, permettant ainsi de séparer efficacement la phase liquide de la phase gazeuse du carburant et évitant de la sorte l'introduction d'air dans le réservoir. En outre, à ces débits de remplissage, l'écoulement du carburant reste invariant et insensible à la position du pistolet d'alimentation.

Le dispositif de l'invention, en adoptant une alimentation hydrocyclonique, permet de structurer l'écoulement de carburant dans le circuit de remplissage et de le rendre invariant aux conditions initiales imposées par l'utilisateur en ce qui concerne la position du pistolet d'alimentation. Ainsi, selon l'invention, on obtient un remplissage fiable contrairement aux dispositifs connus antérieurement selon lesquels l'écoulement du carburant est chaotique, non structuré et dépendant de la position du pistolet d'alimentation.

## Revendications

1. Dispositif de remplissage de réservoir à carburant (1) notamment pour un véhicule automobile, comprenant une tubulure d'alimentation en carburant (5) du réservoir (1) communiquant avec une embouchure de réception et de guidage (2) d'un pistolet d'alimentation en carburant (3), **caractérisé en ce que** la tubulure d'alimentation (5) est reliée à l'embouchure (2) par l'intermédiaire d'un canal d'alimentation (9) raccordé à la sortie de l'embouchure (2) et présentant une partie découpée selon sa longueur, enroulée sur la partie supérieure (5a) de la tubulure (5) et fixée de façon étanche sur la partie supérieure (5a) pour définir une chambre d'arrivée de carburant communiquant avec une saignée sous-jacente réalisée à travers la paroi de la tubulure (5) en s'étendant dans le même sens d'enroulement que la partie découpée du canal d'alimentation (9) de façon à définir un passage d'entrée de carburant tangentiel à la surface interne de la tubulure (5).

2. Dispositif selon la revendication 1, **caractérisé en ce que** la tubulure d'alimentation (5) comprend à sa partie inférieure, en-dessous du passage d'entrée de carburant, un convergent (10) raccordé au réservoir (1) par une tuyauterie (6, 7, 8).

3. Dispositif selon la revendication 1 ou 2, **caractérisé en ce que** la partie découpée du canal d'alimentation (9) est enroulée en formant une hélice s'étendant autour de la partie supérieure (5a) de la tubulure (5).

4. Dispositif selon l'une des revendications précédentes, **caractérisé en ce que** la partie enroulée découpée du canal d'alimentation (9) est inclinée relativement à l'axe longitudinal de la tubulure (5).

5. Dispositif selon l'une des revendications précédentes, **caractérisé en ce que** l'extrémité (9b) du canal d'alimentation raccordée à l'embouchure (2) présente une inclinaison relativement à la partie supérieure (5a) de la tubulure (5) comprise entre 0 et 90°.

6. Dispositif selon l'une des revendications précédentes, **caractérisé en ce que** l'extrémité supérieure de la tubulure (5) est obstruée par une paroi transversale en bout (5c).

7. Dispositif selon la revendication 6, **caractérisé en ce que** la paroi de fermeture (5c) de la tubulure (5) comporte un embout tubulaire (5d) de raccordement d'une conduite (13) raccordée à son extrémité opposée à une ligne de dégazage (14).

8. Dispositif selon l'une des revendications précédentes, **caractérisé en ce que** le passage d'entrée de carburant est réalisé sur le dessus de la tubulure (5).

9. Dispositif selon l'une des revendications précédentes, **caractérisé en ce que** la partie extrême du conduit (9), située côté alimentation en carburant, se trouve dans le prolongement de l'embouchure (2) et permet le guidage du bec (3a) du pistolet (3) dans le conduit (9) tout en laissant une certaine distance enre l'extrémité du bec (3a), une fois le pistolet (3) postionné, et le début de la courbure du conduit périphérique (9) et en permettant la détection du carburant par le pistolet (3) par le prolongement de la saignée sous-jacente.

10. Dispositif selon la revendication 9, **caractérisé en ce que** la distance précitée est comprise entre environ 5 mm et environ 5 cm.

## Patentansprüche

1. Vorrichtung zum Betanken eines Kraftstoffbehälters (1), insbesondere für ein Kraftfahrzeug, mit einem Zuleitungsrohr (5) für die Zuleitung von Kraftstoff in den Kraftstoffbehälter (1), das mit einem Einfüllstutzen (2) zur Aufnahme und zum Führen einer Kraftstoffzapfpistole (3) verbunden ist, **dadurch gekennzeichnet, daß** das Zuleitungsrohr (5) mit dem Einfüllstutzen (2) über einen Zuleitungskanal (9) verbunden ist, der an den Ausgang des Einfüllstutzens (2) angeschlossen ist und einen seiner Länge nach ausgeschnittenen Abschnitt aufweist, der auf dem oberen Teil (5a) des Zuleitungsrohrs (5) aufgewickelt und abgedichtet auf dem oberen Teil (5a) befestigt ist, um eine Kraftstoffzulaufkammer zu begrenzen, die mit einem darunter liegenden Einschnitt verbunden ist, der durch die Wandung des Zuleitungsrohrs (5) hindurch ausgebildet ist, wobei er in der gleichen Wickelrichtung verläuft wie der ausgeschnittene Teil des Zuleitungskanals (9), so daß er einen zu der Innenfläche des Zuleitungsrohrs (5) tangentialen Kraftstoffzulaufdurchgang begrenzt.

2. Vorrichtung nach Anspruch 1, **dadurch gekennzeichnet, daß** das Zuleitungsrohr (5) in seinem unteren Teil unter dem Kraftstoffzulaufdurchgang einen konvergierenden Abschnitt (10) aulweist, der über eine Rohrleitung (6, 7, 8) mit dem Kraftstoffbehälter (1) verbunden ist.

3. Vorrichtung nach Anspruch 1 oder 2, **dadurch gekennzeichnet, daß** der ausgeschnittene Teil des Zuleitungskanals (9) unter Bildung einer Helix gewickelt ist, die um den oberen Teil (5a) des Zuleitungsrohrs (5) verläuft.

4. Vorrichtung nach einem der vorhergehenden Ansprüche, **dadurch gekennzeichnet, daß** der ausgeschnittene und aufgewickelte Teil des Zuleitungskanals (9) relativ zur Längsachse des Zuleitungsrohrs (5) geneigt ist.

5. Vorrichtung nach einem der vorhergehenden Ansprüche, **dadurch gekennzeichnet, daß** das an den Einfüllstutzen (2) angeschlossene Ende (9b) des Zuleitungskanals relativ zu dem oberen Teil (5a) des Zuleitungsrohrs (5) eine zwischen 0 und 90° liegende Neigung aufweist.

6. Vorrichtung nach einem der vorhergehenden Ansprüche, **dadurch gekennzeichnet, daß** das obere Ende des Zuleitungsrohrs (5) von einer transversalen Stirnwand (5c) verschlossen ist.

7. Vorrichtung nach Anspruch 6, **dadurch gekennzeichnet, daß** die Verschlußwand (5c) des Zuleitungsrohrs (5) ein rohrförmiges Anschlußstück (5d) für den Anschluß einer Leitung (13) aufweist, die an ihrem entgegengesetzten Ende mit einer Entgasungsleitung (14) verbunden ist.

8. Vorrichtung nach einem der vorhergehenden Ansprüche, **dadurch gekennzeichnet, daß** der Kraftstoffzulaufdurchgang auf der Oberseite des Zuleitungsrohrs (5) ausgebildet ist.

9. Vorrichtung nach einem der vorhergehenden Ansprüche, **dadurch gekennzeichnet, daß** der auf der Seite der Kraftstoffzuführung liegende Endbereich der Leitung (9) in der Verlängerung des Einfüllstutzens (2) liegt und die Führung der Spitze (3a) der Kraftstoffzapfpistole (3) in der Leitung (9) ermöglicht, wobei er dann, wenn die Kraftstoffzapfpistole (3) positioniert ist, einen gewissen Abstand zwischen dem Ende der Spitze (3a) und dem Anfang der Krümmung der peripheren Leitung (9) beläßt und die Erfassung des Kraftstoffs durch die Kraftstoffzapfpistole (3) durch die Verlängerung des darunter liegenden Einschnitts ermöglicht.

10. Vorrichtung nach Anspruch 9, **dadurch gekennzeichnet, daß** der genannte Abstand zwischen etwa 5 mm und etwa 5 cm liegt.

## Claims

1. A device for filling a fuel tank (1) in particular for a motor vehicle, comprising a fuel filler pipe (5) of the tank (1) communicating with an orifice (2) for receiving and guiding a fuel supply nozzle device (3), **characterised in that** the filler pipe (5) is connected to the orifice (2) by the intermediary of a supply channel (9) connected to the outlet of the orifice (2) and having a longitudinally cut-out portion convolute on the upper portion (5a) of the pipe (5) and fixed in a sealed manner to the upper portion (5a) for defining a fuel intake chamber communicating with a subjacent aperture formed through the wall of the pipe (5) and extending in the same convolute direction as the cut-out portion of the supply channel (9) so as to define a fuel inlet passage tangential to the internal surface of the pipe (5).

2. A device according to Claim 1, **characterised in that** the filler pipe (5) includes in its lower portion below the fuel inlet passage an inwardly tapered portion (10) connected to the tank (1) by a pipe (6, 7, 8).

3. A device according to Claim 1 or 2, **characterised in that** the cut-out portion of the supply channel (9) is coiled to form a helix extending around the upper portion (5a) of the pipe (5).

4. A device according to any one of the preceding claims, **characterised in that** the coiled cut-out portion of the supply channel (9) is inclined relatively to the longitudinal axis of the pipe (5).

5. A device according to any one of the preceding claims, **characterised in that** the end (9b) of the supply channel connected to the orifice (2) has an inclination with respect to the upper portion (5a) of the pipe (5) of between 0 and 90°.

6. A device according to any one of the preceding claims, **characterised in that** the upper end of the pipe (5) is occluded by a transverse end wall (5c).

7. A device according to Claim 6, **characterised in that** the occluding wall (5c) of the pipe (5) includes a tubular joining piece (5d) for connecting to a conduit (13) connected at its opposite end to a degassing line (14).

8. A device according to any one of the preceding claims, **characterised in that** the fuel inlet passage is formed on top of the pipe (5).

9. A device according to any one of the preceding claims, **characterised in that** the end portion of the conduit (9) situated on the fuel supply side is located in the prolongation of the orifice (2) and allows the mouthpiece (3a) of the nozzle device (3) to be guided in the conduit (9) while leaving a certain distance between the end of the mouthpiece (3a) and the beginning of the curvature of the peripheral conduit (9) when the nozzle device (3) is in position, and while allowing the nozzle device (3) to detect the fuel by means of the prolongation of the subjacent aperture.

10. A device according to Claim 9, **characterised in that** the above-mentioned distance is between approximately 5 mm and approximately 5 cm.
